# EUROPEAN PATENT SPECIFICATION

(11) **EP 0 701 923 B1**
(45) Date of publication and mention of the grant of the patent: **29.07.1998**
(21) Application number: 95306306.2
(22) Date of filing: 08.09.1995
(51) Int. Cl.: B60R 7/06, A47B 49/00, B60P 3/36

(54) **A storage device**
Aufnahmebehälter
Dispositif de rangement

(30) Priority: 17.09.1994 GB 9418804
(43) Date of publication of application: 20.03.1996
(73) Proprietor: FORD MOTOR COMPANY LIMITED, Brentwood, Essex CM13 3BW (GB); FORD FRANCE SOCIETE ANONYME, 92506 Rueil Malmaison Cedex (FR); FORD-WERKE AKTIENGESELLSCHAFT, 50735 Köln (DE)
(72) Inventor: Condon, Alan Richard, East Hanningfield, Essex CM3 8XA (GB); Bury, Simon, Bexleyheath, Kent DA6 8PF (GB)
(74) Representative: Messulam, Alec Moses

(56) References cited:
- CH-A- 287 820
- FR-A- 1 265 981
- FR-A- 2 549 124
- US-A- 1 882 277
- US-A- 4 568 117

## Description

The present invention relates to a storage device according to the preamble of claim 1.

Conventional storage means in motor vehicles include door pockets, glove compartment, and boot. None of these storage means, however, allows the segregation and easy access of separate types of stored items.

US-A-4 568 117 describes a storage device according to the preamble of claim 1. The storage capacity of this turntable is severely limited as a result of its prismatic shape.

According to the present invention there is provided a storage device for use in the passenger compartment of a motor vehicle, the device comprising a frame with an open side and an elongate body mounted in the frame for rotation about a longitudinal axis between a plurality of predetermined positions, in each of which a different part of the body is presented at the open side of the frame, characterised in that the body is of a generally D-shaped section and includes a closed compartment which can be presented at the open side of the frame in one of the predetermined positions, the compartment having an openable, part-cylindrical roof.

The invention therefore provides a storage device which may be conveniently mounted, for example in the passenger side of a vehicle instrument panel. The closed compartment with the part-cylindrical roof allows loose items to be stowed, and makes optimum use of the cylindrical space which is required to enable the body to rotate. The roof preferably has an openable region which forms a lid.

The body has one flat surface which preferably functions as a shelf with the body in one of the predetermined positions.

The lid of the closed compartment may be spring loaded so as to bias the lid towards an open position. When the body is rotated to a position at which the compartment associated with the lid is to be accessed, the lid is opened by the spring loading to allow the user access to the compartment. Rotation of the body may then bring the lid into contact with a wall surrounding the aperture in the vehicle, causing the lid to become closed when its compartment is turned to an inaccessible or less accessible position. When a spring loaded lid is provided, it is preferred that rotation of the body be restricted to the direction in which the lid is automatically closed by a surrounding part of the frame, to avoid the user having to hold the lid shut whilst the body turns. In an alternative embodiment, opening and closing of the lid may be actuated by means of an electric motor in response to a sensor which determines the position of the compartment relative to the vehicle.

A detent mechanism may be provided to releasably hold the body in each of the predetermined positions. The detent mechanism may comprise a spring loaded ball which is mounted in a wall of the body, for engagement with one or more recesses in a surrounding wall forming part of the frame. Alternatively a wall of the body may have the recesses, and a spring loaded ball may be mounted in the surrounding wall. A magnetic detent mechanism may also be used. The detent mechanism, when engaged, may provide only a limited inhibition of rotational movement so that it may be overcome by the user turning the body. Alternatively the detent mechanism could be provided with disengagement means which are actuated by the user; for example a lever which pulls the spring loaded ball out of the recess.

The body may be rotated by hand or by means of an electric motor. In one embodiment, rotating the body from one end position to the other winds up a spring, so that when a detent arrangement is released, the body is rotated in the opposite direction by the stored spring energy.

One or more of the compartments may be internally shaped so as to receive and stow a specific item, for example a first aid box, a box of tissues, one or more cassette tapes, or one or more compact discs. This shape may be moulded into the compartment during manufacture of the compartment or the body, or it may be provided by means of an insert. The use of inserts would allow each body to be manufactured as an identical unit to minimise manufacturing costs, and each unit could then be customised by the use of suitable inserts to meet a user's individual stowage requirements.

The body may be integrally formed or moulded, or it may comprise two or more modular components adapted to be secured to each other. For example a first component may comprise a compartment unit for stowing cassette tapes, and a second component may comprise the closed compartment for general storage. The two may be secured together by means of interengaging slots and flanges, or by any other suitable means.

The invention will now be further described, by way of example, with reference to the following drawings in which:
Figure 1 is a schematic view of a storage device in accordance with the invention mounted in a motor vehicle;
Figure 2 is a sectional view through a central part of the device shown in Figure 1;
Figure 3 is a sectional view similar to that of Figure 2, with the body rotated through 55°;
Figure 4 is a sectional view similar to that of Figure 2, with the body rotated through 180°; and
Figure 5 is a sectional view through an end part of the storage device shown in Figure 1.

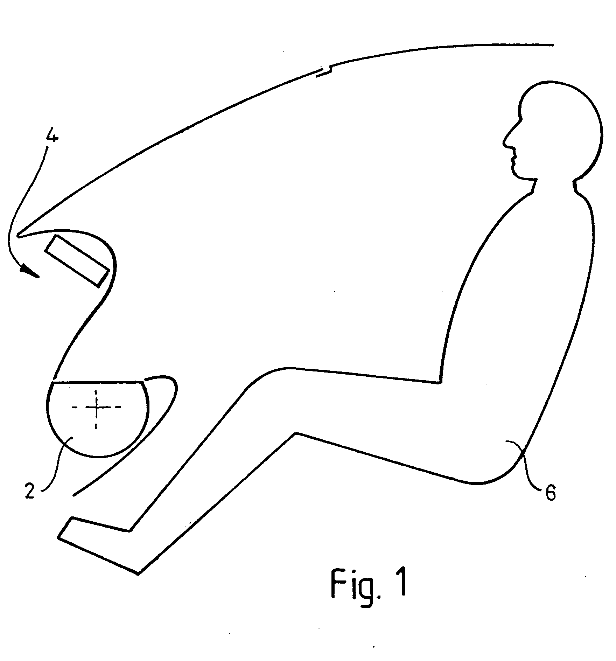

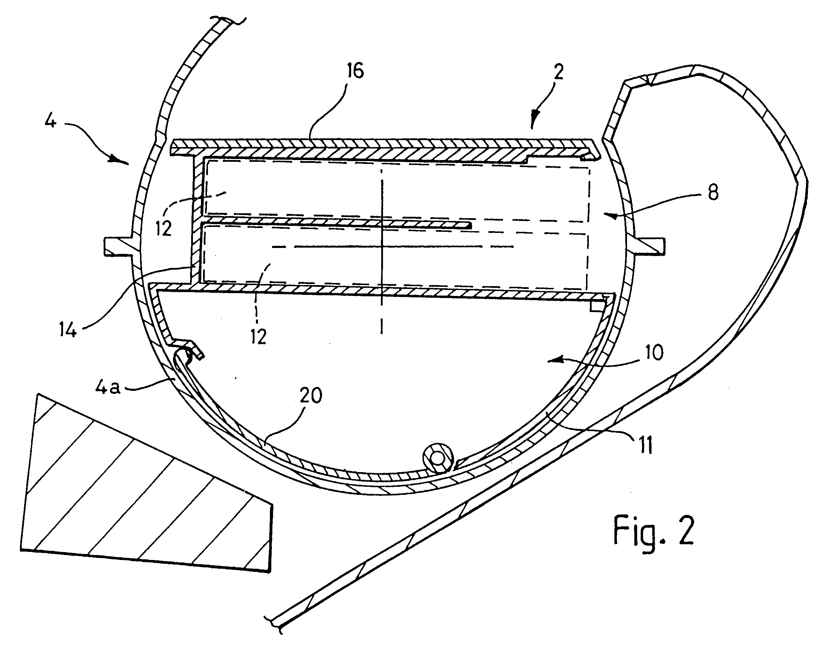

Figure 1 shows a body 2 of generally D-shaped section rotatably mounted in the instrument panel 4 of a motor vehicle and surrounded by parts of the panel which form a frame 4a (see Figure 2) in which the body is rotatable. The body 2 is mounted on the passenger side and may readily be accessed by a user 6. The body 2 is constrained to be rotatable only counterclockwise as the Figure is viewed.

Figure 2 shows how the body 2 is divided into a cassette compartment 8 and a closed utility compartment 10 with a part-cylindrical roof 11. A modular member 14 defines the internal shape of the cassette compartment 8, which is adapted to stow cassette tapes 12. The compartment 8 may have interchangeable inserts to accommodate different contents, eg tape cassettes and/or compact discs. The cassette compartment 8 has a wall 16 which is flat and which functions as a shelf when the body 2 is positioned as shown. The roof 11 of the utility compartment 10 is provided with a spring loaded lid 20. The spring bias urges the lid 20 to open, but it is here restrained from opening by a wall of the frame 4a of the instrument panel housing 4 in which the body is mounted. The frame 4a may be substantially continuous, or it may be open at the bottom, for example in the form of a metal bracket, so as to allow small objects such as coins to fall through without inhibiting rotation of the body 2.

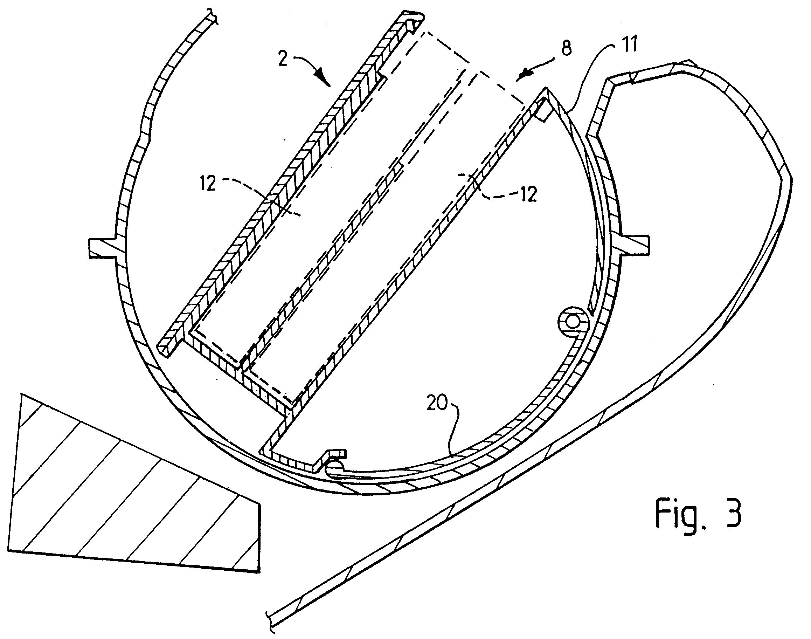

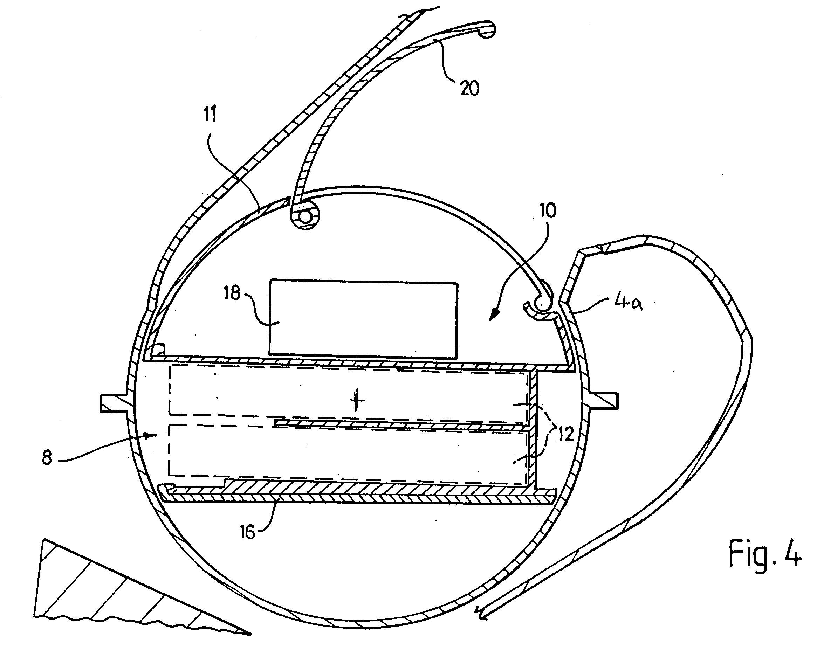

Referring now to Figure 3, the body 2 has been turned through 55° counterclockwise by the user 6, thereby allowing access to the cassette compartment 8 for the stowage or removal of cassette tapes 12. As shown in Figure 4, further rotation of the body 2 through 180° from the position shown in Figure 2 brings the utility compartment 10 to the top. The spring loaded lid 20 lifts up automatically to allow the user 6 access to, for example, a first aid box 18 which is stowed in the utility compartment 10. A further rotation of 180° returns the body 2 to the state shown in Figure 2.

The curved roof of the compartment 10 ensures that the internal volume of the compartment is the maximum which can be accommodated on the rotatable body. Because the compartment will be out of sight when the body is in the position shown in Figure 2, it can be used for stowing valuable items such as a camera or a portable telephone, out of sight.

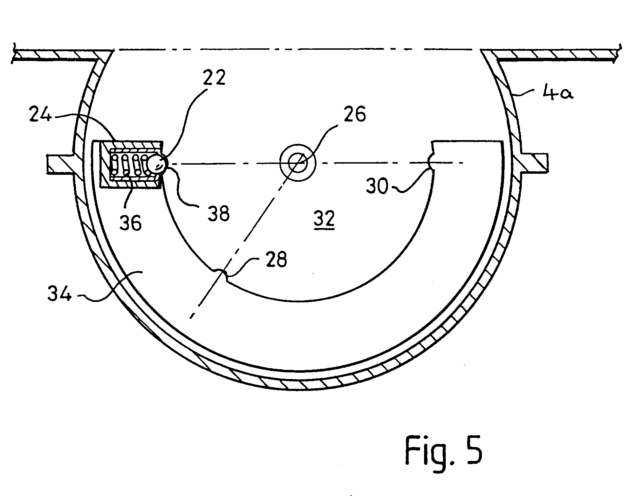

Figure 5 shows a detent mechanism for releasably retaining a wall 34 of the body 2 at any of the angles shown in Figure 2 to 4. The wall 34 has an insert 24 which houses a ball 22 and a helical spring 36, which urges the ball towards the pivot 26. Other spring means, for example a live plastics spring, may be used in place of the helical spring 36. The mouth of the insert 24 has an inwardly directed peripheral lip of a diameter slightly smaller than that of the ball 22 so that the ball 22 is retained in the insert 24. A wall 32 which is fixed relative to the instrument panel 4 has recesses 28, 30 and 38 in which the ball 22 engages to provide a "click-stop". The detent mechanism acts to provide a positive location for the body 2 at the preferred angles of 0, 55 and 180°, but it may be over-ridden by further rotation of the body 2 by the user.

The invention therefore provides a convenient storage device for a motor vehicle, which allows ready access to separate stowage compartments.

## Claims

1. A storage device for use in the passenger compartment of a motor vehicle, the device comprising a frame (4a) with an open side and an elongate body (2) mounted in the frame for rotation about a longitudinal axis between a plurality of pre-determined positions, in each of which a different part (8,10,16) of the body is presented at the open side of the frame, characterised in that the body (2) is of a generally D-shaped section and includes a closed compartment (10) which can be presented at the open side of the frame (4a) in one of the pre-determined positions, the compartment having an openable, part-cylindrical roof (20).

2. A storage device as claimed in Claim 1, characterised in that the part-cylindrical roof includes a lid (20) which is spring loaded so as to bias the lid towards an open position.

3. A storage device as claimed in any one of the preceding claims, characterised in that a detent mechanism (22,28,30,38) is provided to releasably hold the elongate body in each of the predetermined positions.

4. A storage device as claimed in Claim 3, characterised in that the detent mechanism comprises a spring loaded detent (22) adapted to releasably engage with a recess (28,30,38).

5. A storage device as claimed in any one of the preceding claims, characterised in that the elongate body (2) has a flat surface (16) which functions as a shelf in one of the predetermined positions.

6. A storage device as claimed in any one of the preceding claims, characterised in that the elongate body (2) includes one or more compartments (8) provided with an insert which is adapted to receive a specific item.

7. A storage device as claimed in Claim 6, characterised in that an insert is adapted to receive and stow a cassette tape.

## Patentansprüche

1. Eine Ablegevorrichtung zur Benutzung im Innenraum eines Kraftfahrzeugs, wobei die Vorrichtung einen Rahmen (4a) enthält, mit einer offenen Seite und einem langen Körper (2), der in den Rahmen zum Rotieren um eine Längsachse zwischen einer Vielzahl von vorbestimmten Positionen, eingebaut ist, wobei in jeder Position ein verschiedener Teil (8, 10, 16) des Körpers an der offenen Seite des Rahmens präsentiert wird, dadurch gekennzeichnet dass der Körper (2) aus einem im allgemeinen D-förmigen Abschnitt besteht und ein geschlossenes Fach (10) enthält, das an der offenen Seite des Rahmens (4a) in einer der vorbestimmten Positionen präsentiert werden kann, wobei das Fach ein Dach (20) hat, das geöffnet werden kann und teilweise zylinderförmig ist.

2. Eine Ablegevorrichtung nach Anspruch 1, dadurch gekennzeichnet dass das teilweise zylinderförmige Dach einen Deckel (20) enthält, der federbelastet ist, so dass der Deckel in eine offene Position gelenkt wird.

3. Eine Ablegevorrichtung nach irgendeinem der vorausgegangenen Ansprüche, dadurch gekennzeichnet dass ein Mechanismus (22,28,30, 38) geliefert wird, um den langen Körper fest in jeder der vorbestimmten Positionen lösbar zu halten.

4. Eine Ablegevorrichtung nach Anspruch 3, dadurch gekennzeichnet dass der Feststellmechanismus einen federbelasteten Feststeller (22) enthält, der so ausgelegt ist, dass er sicher in eine Ausbuchtung (28,30, 38) lösbar einrastet.

5. Eine Ablegevorrichtung nach irgendeinem der vorausgegangenen Ansprüche, dadurch gekennzeichnet dass der lange Körper (2) eine flache Oberfläche (16) hat, die als eine Ablegeplatte in einer der vorab erwähnten Positionen fungiert.

6. Eine Ablegevorrichtung nach irgendeinem der vorausgegangenen Ansprüche, dadurch gekennzeichnet dass der lange Körper (2) ein Fach oder mehrere Fächer (8) enthält, die mit einem Einsatz versehen sind, der dazu ausgelegt ist, einen bestimmten Gegenstand aufzunehmen.

7. Eine Ablegevorrichtung nach Anspruch 6, dadurch gekennzeichnet dass ein Einsatz dazu ausgelegt ist, eine Kassette aufzunehmen und aufzubewahren.

## Revendications

1. Dispositif de rangement destiné à être utilisé dans le compartiment passager d'un véhicule à moteur, le dispositif comprenant un cadre (4a) avec un côté ouvert et un corps allongé (2) monté dans le cadre de manière à pouvoir tourner autour d'un axe longitudinal entre plusieurs positions prédéterminées, dans chacune desquelles une partie différente (8, 10, 16) du corps est présentée au niveau du côté ouvert du cadre, caractérisé en ce que le corps (2) a généralement une coupe en forme de D et inclut un compartiment fermé (10) qui peut être présenté au niveau du côté ouvert du cadre (4a) dans l'une des positions prédéterminées le compartiment présentant un toit (20) ouvrable partiellement cylindrique.

2. Dispositif de rangement selon la revendication 1, caractérisé en ce que le toit partiellement cylindrique inclut un couvercle (20) qui est chargé par ressort de manière à solliciter le couvercle vers une position ouverte.

3. Dispositif de rangement selon l'une des revendications précédentes. caractérisé en ce qu'un mécanisme d'arrêt (22,28,30,38) est fourni pour maintenir de manière amovible le corps allongé dans chacuune des positions prédéterminées.

4. Dispositif de rangement selon la revendication 3, caractérisé en ce que le mécanisme d'ârtêt comprend un goujon d'arrêt (22) destiné à s'engager de manière amovible avec un évidement (28,30,38), sous l'action d'un ressort.

5. Dispositif de rangement selon l'une des revendications précédentes, caractérisé en ce que le corps allongé (2) présente une surface plate (16) qui sert d'étagère dans l'une des positions prédéterminées.

6. Dispositif de rangement selon l'une des revendications précédentes, caractérisé en ce que le corps allongé (2) inclut un ou plusieurs compartiments (8) munis d'un insert qui est destiné à recevoir un article spécifique.

7. Dispositif de rangement selon la revendication 6, caractérisé en ce qu'un insert est destiné à recevoir et à ranger une cassette.
